# EUROPEAN PATENT SPECIFICATION

(11) **EP 4 294 628 B1**
(45) Date of publication and mention of the grant of the patent: **15.10.2025**
(21) Application number: 22755641.2
(22) Date of filing: 25.01.2022
(51) Int. Cl.: B31B 70/04, B26D 5/20, B65H 29/00, B65G 47/00, B31B 50/04, B65H 5/08, B26D 7/06, B65H 29/04

(54) **A TRANSFERRING SYSTEM AND A METHOD FOR TRANSFERRING CUT PIECES OF WEB MATERIAL AROUND CORNERS**
ÜBERTRAGUNGSSYSTEM UND VERFAHREN ZUM ÜBERTRAGEN VON GESCHNITTENEN TEILEN AUS BAHNMATERIAL UM ECKEN
SYSTÈME ET PROCÉDÉ DE TRANSFERT DE PIÈCES DÉCOUPÉES DE MATÉRIAU EN BANDE TOURNANT LES ANGLES

(30) Priority: 19.02.2021 IN 202111007061
(43) Date of publication of application: 27.12.2023
(73) Proprietor: LOHIA CORP LIMITED, Kanpur, Uttar Pradesh 208022 (IN)
(72) Inventor: LOHIA, Gaurav, Kanpur, 208 022 (IN); SPEKOWIUS, Marcel, Kanpur, 208 022 (IN)
(74) Representative: Müller-Boré & Partner Patentanwälte PartG mbB
(86) International application number: PCT/IB2022/050615
(87) International publication number: WO 2022/175766

(56) References cited:
- EP-A2- 2 323 935
- EP-B1- 3 017 940
- EP-B1- 3 017 940
- EP-B1- 3 148 789
- DE-U1- 202014 010 628
- US-A1- 2004 237 738
- US-A1- 2008 265 493

## Description

### Field of Invention:

The present invention relates to a transferring system used in conversion of web material rolls into piece goods such as bags. In particular, the invention relates to a method of delivering flat cut pieces of web material around a corner for further processing.

### Background of invention:

During the conversion of continuous web material (W) to pieced goods in a conversion line, the web material is pulled-off a material roll in a cutting direction. A cutting unit cuts the pulled off web material into individual pieces of required length for further processing to the final product such as a bag in the mainline. The conveying systems in the cutting unit and mainline are usually operated at different speeds, depending of the layout on the conversion line and geometry of the product. The transfer of the pieced goods (or pieces) to the mainline is done together by a transportation unit and a pull-off unit. Most existing conversion processes require that the mainline is operated at an angle most preferably 90°, to the cutting direction. This is often required for the conversion of tubular web material to sacks because the further processing requires operations such as the opening of the ends and folding and closing at the open ends of the cut pieces, for which the individual operational units need to access the cut pieces from the ends of the cut pieces. This can be done more easily when the cut piece is processed further in a travel direction of up to 90° to the original cutting direction because it enables stepwise processing of the open edges of the tubular material in the mainline direction.

The cutting unit and pull-off unit can either be operated in a stop-and-go process or in continuous running. In stop-and-go operation, the material is stopped before every cut, fixed withholding devices, and pulled in the mainline directly after the cutting usually by using clamping devices. In continuous running, the material is continuously pulled from the material roll and cut while the material is moving. The continuous delivery and cutting is usually more stable and robust at high speed, because it does not require high acceleration/deceleration of the pieced good after the cutting. The movement of the cut piece around the corner to the mainline, however, is more difficult compared to stop-and-go operation, because it requires a grabbing of the material during running and a release at the speed main line. Also, the continuous operation requires a solution to avoid collision between two consecutive flat pieces. The suggested invention is directed to solve these difficulties and provide a machine unit for angular pulling of the flat workpiece in continuous motion.

Patent EP 2711166 A1 describes a method and device for transporting flat workpieces in the orthogonal direction of the machine direction. The Patent EP 2711166 A1 discloses a method of transferring workpiece in stop and go fashion during holding and bag transfer wherein one cut piece lies over the other. Such method involve complex bag transfer and require great accuracy so that bag during transfer does not collide with each other. In contrast to patent EP 2711166 A1 the suggested invention does not use holding devices in a stop-and-go operation, which are consecutively released for the pull-off (Claim no. 1), but rotational chains on which clamps are mounted are capable to grab the cut piece in continuous motion.

Further, Document DE 1929600 A1 describes a device for transporting flat-tube sections from which bags are made. The tube pieces are alternately deposited in the longitudinal transport direction via a wedge-shaped pivotable switch element on an ascending upper conveying surface and a descending lower conveying surface. A transfer device adjoins the upper or lower conveying surface, each having a support surface on which the tube pieces pass from the longitudinal transport direction into the transverse transport direction. The pieces of tubing then transported in the transverse direction are brought together again by means of conveyor belts.

In the above prior art, the drawback is that tubular bag bodies are travelling in two levels that make the system complicated and also have accessibility issues; for example, if the bag is stuck, it will be difficult to remove and will eventually increase downtime of the machine. These systems also have a more complex assembly. Moreover, there are a number of parts which hinder the easy removal of bag bodies that might get stuck due to machine breakdown.

Further, EP 3148789B1 discloses a device for transporting tubular sack bodies, with a longitudinal transport device with which the tubular sack bodies can be transported essentially in the direction of their longitudinal extent, with a transverse transport device with which the tubular sack bodies can be transported substantially perpendicular to their longitudinal extent. The main drawback of such kind of system is that while transport bag bodies from one direction to another, the system must stop for a moment so as to ensure that bag does not deviate from the desired position and thus ensure there is no sideways movement of bag. Further, EP 3148789B1, discloses a complex structure of bag transportation which reduces the overall efficiency of the system.

Document DE 102009000893A1, describes a device for changing the direction of transport of flat pieces of tubing. The tube pieces are pushed one after the other in the longitudinal direction onto a support surface in order to be taken along by a transfer device in the transverse direction. Before a tube piece can be transported away in the transverse direction, the tube piece must first rest with its side area on the transverse transport plane so that the side area can be grasped by the transfer device. The tubular fabric moves first in the longitudinal direction, then it stops momentarily before starting to move in the transverse direction. A drawback of this scheme is that due to the momentary stoppage of the tubular bag, there are chances of bag shifting to occur.

Document US 2008/265493 A1 describes an air delivery device and printing or coating machinery using the same. The air delivery device is an air knife that cooperates with a printing device such as a printing press, coating machine or the like. In a particular configuration, the air knife is situated adjacent a set of cylinders in the printing device such that upon a sheet or related piece of printed substrate being put in an air flow path created by the air knife, one or more operations can be performed on the still wet printed or coated sheet to minimize the chance of contact of the wet sheet surface with sheet delivery or related components. Examples of such operations may include turning, bending or folding the sheet, as well as drying the ink or coating placed on the sheet by the printing machinery.

Document US 2004/237738 A1 describes a transferring system according to the preamble of claim 1.

In order to overcome the above mentioned problems associated with the transport devices as disclosed in the above mentioned prior art documents, the present invention provides a simplified and efficient transfer device that provides a smooth and gradual change in direction during the transport of the tubular bag bodies.

### Objects of Invention:

The main object of this invention is to provide a transferring system and method for transferring flat pieced goods, mainly of tubular woven fabric, around a corner.

Another object of the invention is to provide a transferring system that can be operated in continuous running of the material as well as in stop-and-go operation.

Yet another object of the present invention is to provide a transferring system and a method to transfer tubular bag bodies wherein the tubular bag moves continuously and gradually without stoppage.

Another object of the invention is to provide a transferring system which avoids collision between consecutive cut pieces during the continuous transfer from cutting to main line direction.

Yet another objective of the present invention is to provide a transferring system and a method to transfer tubular bag bodies run on a single plane to get better accessibility.

Another objective of the present invention is to provide a transferring system and a method to transfer tubular bag bodies from longitudinal to transverse direction that is suitable for different tubular bag sizes with minimal manual adjustment.

A further object of the present invention is to provide a transferring system and a method to transfer tubular bag bodies in such a way that the production rate of the finished bag bodies is increased.

### Brief Description Of Figures:

Figure 1 shows the general setup of conversion machines in the zone of change of direction of a cut piece as a transferring system of the present invention
Figure 2 shows a single layer chain arrangement
Figure 2A shows alternative a double layer chain arrangement
Figure 3 shows a schematic of working of a rotational chain of the present invention
Figure 4 shows speed profile of the rotational chain during the various stages of the passage of a cut piece
Figure 5 shows schematic of rotational clamp head

### List of parts:

1. Transferring system of the present invention
2. Fabric from roll
3. Cut piece of fabric
4. Longitudinal transportation unit
5. Pull off unit
6. Transverse main line unit
7. Grabbing clamp, or clamp
7A. Upper clamp
7B. Lower clamp
7C. Single clamp
8. Grabbed cut piece
9. Cutter unit
10. Rotating chain
10A. Upper chain
10B. Lower chain
11. Compensation regime
12. Grabbing regime
13. Inclined pull off regime
14. Release regime
15. Cutting direction
16. Intermediate Pull off direction or pull off direction
17. Main line direction
18. Speed in cutting direction
19. Speed in main line direction
20. Rotating clamp head
21. Grabbing point
22. Release point
23. Speed of rotating chain
24. Leading edge

### Summary of invention:

The present invention relates to a transferring system for and method of transporting flat cut pieces of fabric, in particular hose section, more particularly in an automated bag conversion machine. The present invention is not restricted to be used in an automated bag conversion machine for transferring flat cut piece of the fabric, but workpieces such as sheet metal or paper can also be transferred by the present invention. The flat cut pieces which are mentioned in the present invention can be made from woven or non-woven fabric which can be coated or non-coated. Further, the cut piece is being transported from its longitudinal direction to its transverse direction around the corners of the automated bag conversion machine.

The term longitudinal direction here refers to the direction of the traveling fabric along its length or running lengthwise whereas transverse direction refers to the direction perpendicular to the cut piece of fabric movement.

According to the present invention, in an automated bag conversion machine, the fabric is unwounded from the unwinder station and is transported in the longitudinal direction further to its being cut into a predetermined length. The cutting of the fabric into the desired bag length is achieved by high speed cutting device, which is mounted on the same plane as of bag transport. The same plane here refers to the same conveyor table on which the bag is moving. The high speed cutting ensures that the supply of the cut pieces matches with the line speed of the machine thereby making the production rate of the bag high.

As soon as the fabric is cut, it is grabbed by the grabbing clamp such that at least a pair of grabbing clamps holds the cut piece and transfers it such that its direction of movement changed from longitudinal to transverse direction without stopping. This phenomenon of change in direction of the cut piece as soon as the fabric is cut is facilitated by the synchronization of the three entities: cutting speed, grabbing of the cut piece material and the line speed of the mainline. There is a gradual change in direction of the cut piece in the inclined fashion such that the cut piece is being pulled off in the mainline direction or transverse direction. Now, the cut piece of fabric is transferred for further processing.

### Detail Description of Invention:

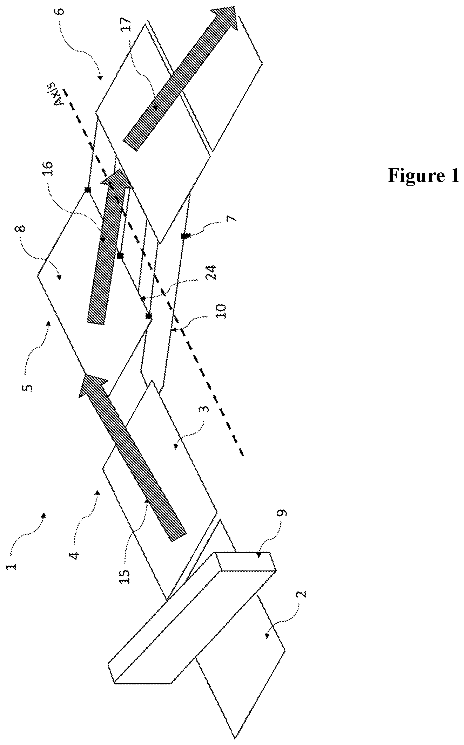

Figure 1 shows a transferring system of the present invention (1) in a schematic manner in the zone of change of direction of a cut piece in the general setup of conversion lines. The fabric from roll (2) which is pulled from a roll in cutting direction (15), is cut into cut pieces of fabric (3) and, through the intermediate pull off direction (16) by using a pull-off unit (5), finally transported to the mainline direction (17) for further processing.

A transferring system of the present invention (1) comprises of the longitudinal transportation unit (4), a pull off unit (5) and transverse mainline unit (6). The longitudinal transportation unit (4) further comprises of conveying system (not shown) having a plurality of driving elements to provide a forwards feed to the cut piece of the fabric (3). A typical driving element may have a set of rollers, conveyor belts, and motors to drive the cut piece of fabric (3) as well as to align the cut piece of fabric (3) along with the conveyor belts such that it move at an equal distance from the sides of the conveyor system. The alignment may be facilitated by any of electromechanical techniques such as using a sensor, edge guiding systems, guiding through mechanical grippers.

The transferring system (1) further comprises a pull off unit (5) which transports the cut piece of fabric (3) from the cutting direction (15), through the intermediate pull off direction (16), to mainline direction (17). Further, the pull off unit (5) comprises a plurality of rotating chains (10) onto which grabbing clamps (7) are present which follow the path of the rotating chains (10). After getting cut by the cutter unit (9), the cut piece of the fabric (3) is grabbed by the clamp (7) and transferred to the intermediate pull off direction (16) which transfer the cut piece (3) by turning it around a corner to the mainline direction (17) such that the cut piece of fabric (3) can be conveyed further to the processing stations.

In general, the transfer of a flat cut piece of fabric (3) from cutting direction (15) to mainline direction (17) requires the compensation of a speed difference. This is necessary because the conveying system of the transverse mainline unit (6) is usually operated at a different speed than the conveying system of longitudinal transportation unit (4) used in the cutting area. A typical directional change system employed to change the direction of a cut piece of fabric (3) requires a unit that grabs the cut piece (3) when it is traveling in the cutting direction (15) and releases it after changing its direction by compensating the speed difference by:
a. running with the same speed as the cut piece (3) during the grabbing stage and,
b. running with the same speed as the main line when the flat piece is released.

The transferring system of the present invention (1) for transferring cut pieces of fabric (3) around corners employs one or multiple rotating chains (10) on which one or more clamp (7) is mounted. The plane of rotation of the rotating chains (10) is substantially parallel to the plane of travel of cut pieces of fabric (3). The layout of the rotating chains (10) is such that it allows them to rotate such that the rotation has a component in each of the three directions (15, 16, 17). The number of rotating chains (10) depends on the size of the cut piece of fabric (3). The greater the length of the cut piece of fabric (3) the number of rotating chains (10) increases as the cut pieces of fabric (3) are usually limp and may require adequate support to stay flat during the directional transition. The rotating chains (10) are consecutively arranged in a cutting direction and are driven by one or multiple motors (not shown). For grabbing the cut pieces of fabric (3), grabbing clamps (7) are mounted on the rotating chains (10). When the rotating chain (10) is rotated the clamps (7) follow the movement of the rotating chain (10) and pull the grabbed cut piece of fabric (3) from the cutting direction (or longitudinal direction) (15) onto the mainline direction (or transverse direction) (17) along the intermediate pull off direction (16) defined by the geometry of the rotating chains (10).

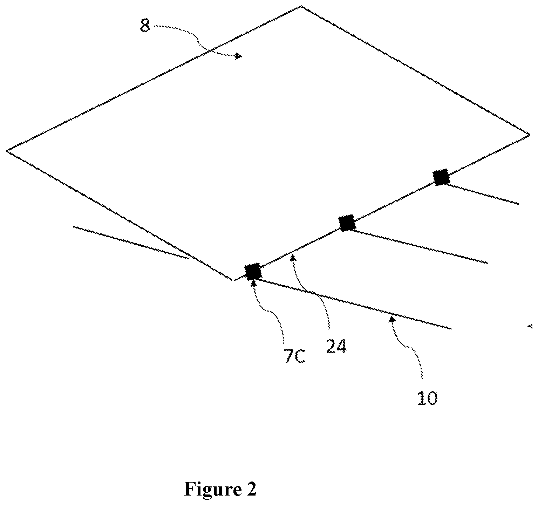

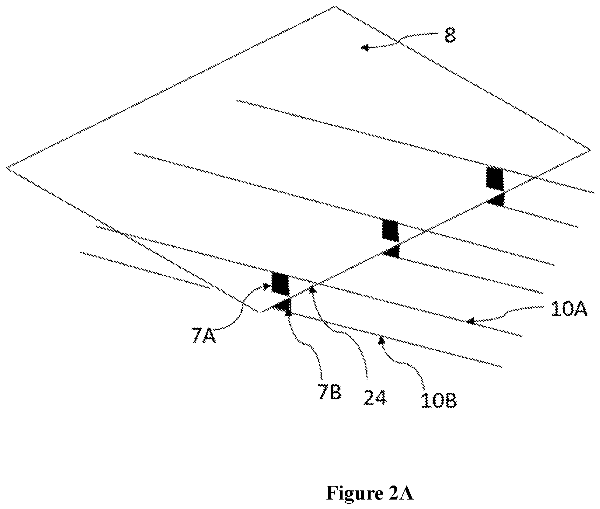

As shown in Figure 2, the clamp (7) may be a single clamp (7C) having two elements between which the cut piece of fabric (3) is grabbed, preferably at its leading edge (24). The single clamp (7C) follows the rotating path of the rotating chain (10) such that it transfers the cut piece (3) from the cutting direction (15) to mainline direction (17). Alternatively, the clamp (7) may have separate units such as an upper and lower clamp (7A, 7B) that are pushed towards each other to clamp the cut pieces (3) between them as shown in figure 2A. The action of pushing the upper and lower clamps (7A, 7B) towards each other may be carried out using any method known to a person skilled in the art, such as a spring mechanism, for example.

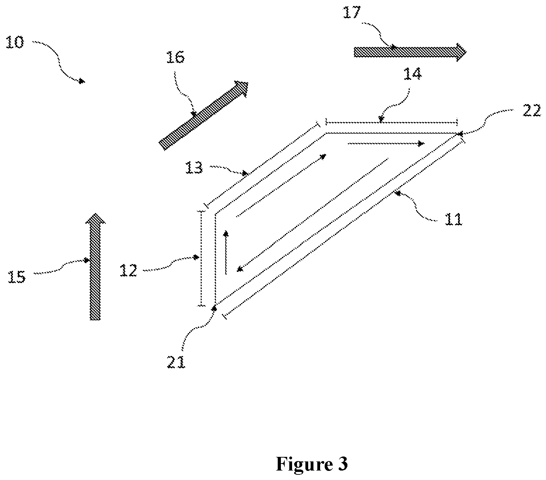

As shown in Figure 3, at any point during its operation, the rotating chain (10) is laid out in four distinct segments or regimes - grabbing regime (12), inclined pull-off regime (13), the release regime (14), and the compensation regime (11). The geometry of the rotating chain (10) is designed in such a way, that the rotating chain (10) is aligned parallel to the cutting direction (15) for grabbing regime (12) which is long enough to enable a proper grabbing of the cut piece(3) by the clamp (7). The point on the chain at which a cut piece (3) is first grabbed onto the chain may be denoted as the grabbing point (21). The next part of the rotating chain (10) geometry is oriented in a transitional direction for inclined pull off regime (13) which is at a predetermined angle to the cutting direction (15). The length of travel of the chain in the transitional direction is determined by the overall geometry of the conversion line. It should be long enough to pull the cut piece (3) from the cutting direction (15) and position it so that it will fit onto the conveyor line in the mainline direction (17). The third part of the chain geometry is the release regime (14) which is parallel to the mainline direction (17), and it is of a length that enables a proper release of the cut piece (3). The point at which the clamped cut piece is released onto the main direction may be denoted as the release point (22). Since a chain is a continuous element, it travels from the release point (22) back to the grabbing point (21) so that the next cut piece (3) may be grabbed. The distance or the portion between the release point (22) and the grabbing point (21) is the compensation regime (11). Since there is no contact of the clamps (7) with the cut piece of the fabric (3) while travelling between release point (22) and grabbing point (21), the rotating chain (10) may assume any suitable geometry or travel path between these two points such that the clamp (7) reaches the grabbing point (21) in the quickest time. This quickest time depends on the processing speed of the machine or generally linked with the speed component in the cutting direction (18).

At any point during their operation, the rotating chains (10) are moving and they may be viewed as rotating chains.

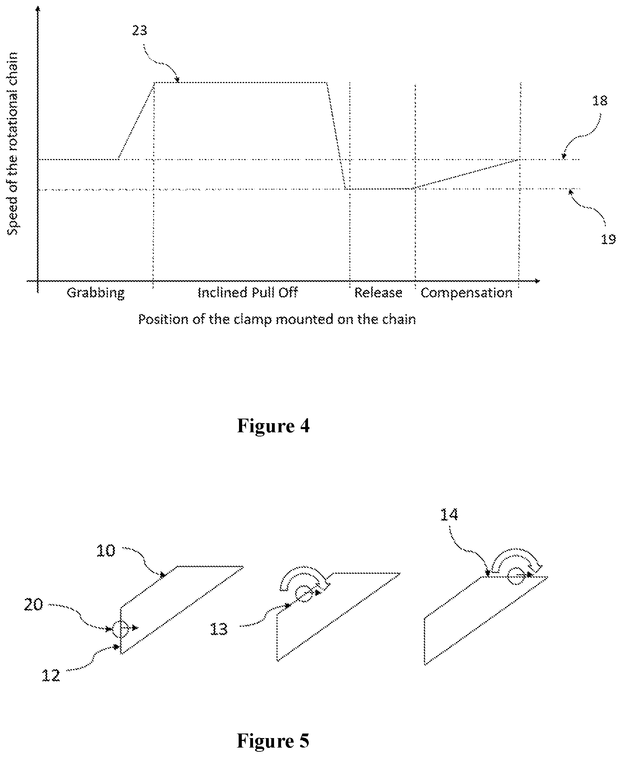

There is a plurality of rotating chains (10) aligned parallel to each other at an offset such that proper grabbing of cut piece (3) of fabric takes place. The proper grabbing here is defined such that the leading edge (24) of cut piece of the fabric (3) is being held or grabbed by the clamps (7) which moves on the chain (10). Such hold is firm enough to transfer the cut piece (3) to a predetermined direction However, every rotating chain (10) can hold multiple clamps (7) but at least one is grabbing the cut piece (3) at a time. Since there is a change of direction that a cut piece (3) undergoes from the time it's cut to the time it's released by the clamp (7) onto the mainline, there is a variation in its speed during this transition, which is shown schematically in Figure 4. The cut piece (3) is first transported in the cutting direction (15). It is important that at the time of grabbing of the cut piece (3) by the clamp (7), the linear speed of the cut piece (3) and the speed of the rotating chain (23) in its grabbing regime (12) are the same. Any difference in these two speeds will result in distortion of the cut piece. While the cut piece (3) is transported in the cutting direction (15), the rotating chains (10) are brought to the same linear speed, typically by accelerating it, as that of the cut piece (3). During the acceleration, at least one grabbing clamp (7) mounted on the rotating chain (10) must be positioned in the grabbing (12) regime of the chain (10). Also, the acceleration of the chain must happen only when any previous cut piece is released, and when no material is currently grabbed by the clamp (7). When the rotating chain (10) reaches the same speed as that of the cut piece, the clamp (7) is closed to grab the cut piece (3), and the material is pulled by the rotational movement of the rotating chain (10). Once the clamps (7) are closed, the rotating chains (10) are accelerated to ensure that the speed component in cutting direction (18) of the grabbed cut piece (8) is sufficiently high that consecutive material i.e. cut piece of fabric (3) pulled from the material roll does not collide when the grabbed cut piece (8) moves in the intermediate pull-off direction (16). When the grabbed cut piece (8) is pulled long enough in the intermediate pull-off direction (16) to safely change its speed to speed in main line direction (19), without collision with the oncoming consecutive cut piece of fabric (3) from the material roll or material already delivered in the main line, the speed of the rotating chain (23) is adjusted again to enable a proper release of the grabbed cut piece (8) in the release regime (14) of the chain geometry. After the grabbed cut piece (8) is released, the speed of rotating chain (23) is controlled in a way to ensure that the clamp (7) is at the position to start grabbing of the next piece when it must be grabbed.

There is another key aspect to the present invention. It is desirable to avoid twisting or distorting the cut piece (3) during the inclined pull-off (13). To achieve this, it is essential that the edges of the cut piece retain their absolute and relative orientation throughout their travel. The cut piece of fabric (3) while travelling from cutting direction (15) to main line direction (17) via intermediate pull off direction (16) should not deviate from its original position such that its leading edge (24) is always parallel to the axis as shown in figure 1. As shown in figure 5, this is facilitated by using a rotational clamp head (20). The rotation of the clamp head (20) compensates for the directional changes resulting from the movement path of the clamp (7).

It is possible to arrange the rotating chain (10) in a single layer or plane below or above the cut piece (3) or in a double layer or a two-plane arrangement in which one set of chains rotates above the plane of the grabbed cut piece (8) and one set below. The single layer approach is preferable if the clamps (7) are designed with a grabbing style mechanism in which the material is grabbed at the edge closest to the main line. The double layer approach uses one set of chains (10A) above the cut piece (3) and one set of chains (10B) below. This configuration is beneficial for clamping devices that work with an upper and lower clamp (7A, 7B), in between which the cut piece of fabric (3) is clamped.

It can be beneficial to drive the rotating chain (10) by servo motors. It is possible to either drive each chain (10A, 10B) individually by a motor or several chains by the same motors. Driving multiple chains by the same motor can be advantageous e.g. for cost reduction purposes, driving the rotating chain (10) individually offers more flexibility for the handling of different sack formats, because individual rotating chain (10) can be turned off when they are not required. The alternative driving systems with mechanical cams and single frequency or frequencycontrolled motors are also possible and can be beneficial depending on the requirements to costs and performance of the system. The method of transferring cut piece of fabric (3) from cutting direction (15) to main line direction (17) around the corners without stop and go involves the following steps:
a) Conveying of the Fabric from the fabric from roll (2) by longitudinal transportation unit (4) in the cutting direction (15) which is being cut by the cutter unit (9) into cut piece of fabric (3) of predetermined length.
b) Simultaneously, the clamp (7) follows the compensation regime (11) on the rotating chain (10) such that it moves from release point (22) to reach at grabbing point (21).
c) At grabbing point (21), the cut piece of fabric (3) is grabbed at the corners or at the leading edges (24) and moves along the grabbing regime (12) path on the rotating chain (10).
d) Now, the grabbed cut piece (8) moved along the inclined pull off (13) path on the rotating chain (10) by the inclined pull off unit (5) along the intermediate pull of direction (16).
e) Further, the cut piece (3) is being transferred to the main line direction (17) following the release regime (14) on the rotating chain (10) by the transverse main line unit (6)
f) Clamps (7) now reached at release point (22) where the cut piece of fabric (3) is released in the main line direction (17).
g) For continuous preceding cut pieces steps (b) to steps (f) are followed again.

It is evident from the foregoing description that the present invention has a number of embodiments.

The principal embodiment discloses a transferring system for transporting flat cut piece of fabric. It's characteristic feature is that it comprises a longitudinal transportation unit (4), a pull off unit (5) and transverse main line unit (6), wherein said longitudinal transportation unit (4) consists of conveying system having plurality of driving elements to provide a forwards feed to the cut piece of the fabric (3); said pull off unit (5) transporting said cut piece of fabric (3) from cutting direction (15), through the intermediate pull off direction (16), to main line direction (17). The pull off unit (5) consists of a plurality of rotating chains (10) onto which grabbing clamps (7) are mounted and which follow the path of the rotating chains (10), wherein after getting cut by the cutter unit (9), said pull-off unit (5) grabs said cut piece of the fabric (3) at the grabbing point (21), said grabbing point being the point on the chain at which a cut piece (3) is first grabbed onto the chain, and transfers it through said intermediate pull off direction (16) releases it at a release point (22) at the time of attaining said main line direction (17) on said transverse main line unit (6) further to the processing stations.

In another embodiment of the transferring system, the driving element has set of rollers, conveyor belts, motors, and an alignment unit to drive the cut piece of fabric (3) as well as to align the cut piece of fabric (3) along the conveyor belts such that it moves at an equal distance from the sides of the conveyor system.

In a further embodiment of the transferring system, the alignment unit consists of sensors, mechanical grippers and edge guiding systems.

In a still further embodiment of the transferring system, the pull-off unit (5) is capable of grabbing said cut piece (3) when it is traveling in the cutting direction (15) and releasing the grabbed cut piece (8) after changing its direction by compensating for the speed difference by running with the same speed as the speed of cut piece (3) during the grabbing stage and, running with same speed as the main line when the grabbed cut piece (8) is released.

In another embodiment of the transferring system, the number of said rotating chains (10) is at least one and wherein each of said rotating chains (10) is mounted with at least one said grabbing clamp (7).

In yet another embodiment of the transferring system, the rotating chains (10) are provided in a single plane below or above the cut piece (3) or in a double layer arrangement or a two-plane in which one set of chains (10A) rotates above plane of the grabbed cut piece (8) and the other set (10B) below it.

In yet further embodiment of the transferring system of the invention (1), the rotating chains (10) have a geometrical configuration that it allows them to rotate such that the rotation has a component in each of the three directions (15, 16, 17), and wherein when the rotating chain (10) is rotated, the clamps (7) follow the movement of the rotating chain (10) and pull the grabbed cut piece of fabric (3) from the cutting direction (or longitudinal direction) (15) onto the mainline direction (or transverse direction) (17) along the intermediate pull off direction (16) defined by the geometry of the rotating chains (10).

In a further embodiment of the transferring system, the clamp (7) is a single clamp (7C) having two elements between which the cut piece of fabric (3) is grabbed, preferably at its leading edge (24).

In another embodiment of the transferring system, the clamp (7) has separate units such as an upper and lower clamp (7A, 7B) that are pushed towards each other to clamp the cut pieces (3) between them.

In still another embodiment of the transferring system, the action of pushing the upper and lower clamps (7A, 7B) towards each other is carried out using a spring mechanism.

In a still further embodiment of the transferring system, the rotating chains (10) have four geometric segments: a grabbing regime (12), an inclined pull-off regime (13), a release regime (14), and a compensation regime (11), wherein said grabbing regime (12) is aligned parallel to the cutting direction (15), said inclined pull-off regime (13) is oriented in a transitional direction set at a predetermined angle to the cutting direction (15), said release regime (14) is laid out parallel to the main direction (17), and the portion between said release point (22) and said grabbing point (21) is the compensation regime (11).

In a further embodiment of the transferring system, the length of said grabbing regime (12) is long enough to enable grabbing of the cut piece (3) by the clamp (7), and wherein the length of travel of the chain in the transitional direction is long enough to pull the cut piece (3) from the cutting direction (15) and position it so that it will fit onto the conveyor line in the mainline direction (17), and the length of said release regime (14) is such that it enables a release of the cut piece (3).

In another embodiment of the transferring system, the rotating chain (10) assumes a travel path between said release point (22) and said grabbing point (21) that is achieved in quickest time made possible by the capability of said transferring system (1).

In a further embodiment of the transferring system, the number of said rotating chains (10) is greater than 1, and wherein all chains are aligned parallelly to each other.

In yet further embodiment of the transferring system, at the time of grabbing of the cut piece (3) by the clamp (7), the linear speed of the cut piece (3) and the speed of the rotating chain (23) in its grabbing regime (12) are the same.

In a still further embodiment of the transferring system, the cut piece (3) is transported in the cutting direction (15), said rotating chains (10) are brought to the same linear speed, typically by accelerating it, as that of the cut piece (3), and wherein during the acceleration, at least one of said grabbing clamp (7) mounted on the rotating chain (10) is positioned in said grabbing (12) regime of the rotating chain (10), and further wherein said acceleration of the chain happens only when any previous cut piece is released, and when no material is currently grabbed by a clamp (7).

In another embodiment of the transferring system, when the rotating chain (10) reaches the same speed as the cut piece (3), the clamp (7) is closed to grab said cut piece (3), and said grabbed cut piece (8) is pulled by the rotational movement of the rotating chain (10), said acceleration being such that the speed component in cutting direction (18) of the grabbed cut piece (8) is sufficiently high that next cut piece of fabric (3) pulled from the material roll does not collide with said grabbed cut piece (8) as it moves in the intermediate pull-off direction (16).

In yet another embodiment of the transferring system, when the grabbed cut piece (8) is pulled long enough in the intermediate pull-off direction (16) to safely change its speed to speed in main line direction (19), without collision with the oncoming consecutive cut piece of fabric (3) from the material roll or material already delivered in the main line, the speed of the rotating chain (23) is adjusted again to enable a proper release of the grabbed cut piece (8) in the release regime (14) of the chain geometry, where after the speed of rotating chain (23) is controlled in a way to ensure that the clamp (7) is at the position to start grabbing of the next piece when it must be grabbed.

In a further embodiment of the transferring system, a rotational clamp head (20) provided on said clamp (7) compensates for the directional changes resulting from the movement path of the clamp (7), whereby the edges of the grabbed cut piece (8) retain their absolute and relative orientation throughout their travel so that its leading edge (24) is always parallel to the axis.

In a yet further embodiment of the transferring system as claimed in claims 1 to 19, wherein said rotating chains (10) are driven by servo motors. Further, there could be a separate servo drive for each chain (10A, 10B) or several chains are driven by one motor.

In another principal embodiment of the invention a method is disclosed for turning cut pieces of web material around corners using the transferring system disclosed herein. The characterising steps of the method are:
a. cutting a piece of fabric (3) to a predetermined length from a fabric from roll (2) conveyed by a longitudinal transportation unit (4) in the cutting direction (15) using a cutter unit (9);
b. moving a clamp (7) mounted on the rotating chain (10) along the path of said rotating chain (10) from a release point (22) to a grabbing point (21);
c. grabbing said cut piece of fabric (3) using said clamp (7) at said grabbing point (21) at the corners or at the leading edges (24) of said cut piece of fabric (3) and moving the grabbed cut piece (8) along a grabbing regime (12) of the rotating chain (10);
d. moving said grabbed cut piece (8) along the intermediate pull-off direction (16) path on the rotating chain (10) by an inclined pull off unit (5);
e. transferring said grabbed cut piece (8) to a main line direction (17) along the release regime (14) path on the rotating chain (10) using a transverse main line unit (6);
f. releasing said grabbed cut piece (8) at said release point (22).

In an embodiment of the method, the pull-off unit (5) is capable of grabbing said cut piece of fabric (3) when it is traveling in the cutting direction (15) and releasing the grabbed cut piece (8) after changing its direction by compensating for the speed difference by:
a. running with the same speed as the speed of cut piece of fabric (3) during the grabbing stage and,
b. running with same speed as the main line when the grabbed cut piece (8) is released.

In another embodiment of the method, the number of said rotating chains (10) is at least one and wherein each of said rotating chains (10) is mounted with at least one said grabbing clamp (7), and wherein said chains (10) are provided in a single plane below or above the cut piece of fabric (3) or in a double layer arrangement or a two-plane in which one set of chains (10A) rotates above plane of the grabbed cut piece (8) and the other set (10B) below it.

In a further embodiment of the method, said rotating chains (10) have four geometric segments: a grabbing regime (12), an inclined pull-off regime (13), a release regime (14), and a compensation regime (11), wherein said grabbing regime (12) is aligned parallel to the cutting direction (15), said inclined pull-off regime (13) is oriented in a transitional direction set at a predetermined angle to the cutting direction (15), said release regime (14) is laid out parallel to the mainline direction (17), and the portion between said release point (22) and said grabbing point (21) is the compensation regime (11).

In a still further embodiment of the method, at the time of grabbing of the cut piece of fabric (3) by the clamp (7), the linear speed of the cut piece of fabric (3) and the speed of the rotating chain (23) in its grabbing regime (12) are the same. In another embodiment of the method, while the cut piece of fabric (3) is transported in the cutting direction (15), said rotating chains (10) are brought to the same linear speed, typically by accelerating it, as that of the cut piece of fabric (3), and wherein during the acceleration, at least one of said grabbing clamp (7) mounted on the rotating chain (10) is positioned in said grabbing (12) regime of the rotating chain (10), and further wherein said acceleration of the chain happens only when any previous cut piece is released, and when no material is currently grabbed by the clamp (7).

In yet another embodiment of the method, the rotating chain (10) reaches the same speed as the cut piece of fabric (3), the clamp (7) is closed to grab said cut piece of fabric (3), and said grabbed cut piece (8) is pulled by the rotational movement of the rotating chain (10), said acceleration being such that the speed component in cutting direction (18) of the grabbed cut piece (8) is sufficiently high that next cut piece of fabric (3) pulled from the material roll does not collide with said grabbed cut piece (8) as it moves in the intermediate pull-off direction (16).

In a further embodiment of the method, the grabbed cut piece (8) is pulled long enough in the intermediate pull-off direction (16) to safely change its speed to speed in main line direction (19), without collision with the oncoming consecutive cut piece of fabric (3) from the material roll or material already delivered in the main line, the speed of the rotating chain (23) is adjusted again to enable a proper release of the grabbed cut piece (8) in the release regime (14) of the chain geometry, whereafter the speed of the rotating chain (23) is controlled in a way to ensure that the clamp (7) is at the position to start grabbing of the next piece when it must be grabbed.

In a still further embodiment of the method, a rotational clamp head (20) provided on said clamp (7) compensates for the directional changes resulting from the movement path of the clamp (7), whereby the edges of the grabbed cut piece (8) retain their absolute and relative orientation throughout their travel so that its leading edge (24) is always parallel to the axis.

In another embodiment of the method, said rotating chains (10) are driven by servo motors, and wherein there is a separate servo drive for each chain (10A, 10B) or several chains (10) are driven by one motor.

While the above description contains much specificity, these should not be construed as limitation in the scope of the invention which is defined by the appended claims.

## Claims

1. A transferring system for transferring cut piece of fabric (3) of web material around corners in the mainline of conversion machine, wherein said transferring system comprises a longitudinal transportation unit (4), a pull off unit (5) and transverse main line unit (6), wherein said longitudinal transportation unit (4) consists of conveying system having plurality of driving elements to provide a forwards feed to the cut piece of the fabric (3); said pull off unit (5) transporting said cut piece of fabric (3) from cutting direction (15), through the intermediate pull off direction (16), to main line direction (17); **characterized in that** said pull off unit (5) consists of a plurality of rotating chains (10) onto which grabbing clamps (7) are mounted and which follow the path of the rotating chains (10), wherein after getting cut by the cutter unit (9), said pull-off unit (5) grabs said cut piece of the fabric (3) at the grabbing point (21), said grabbing point being the point on the chain at which a cut piece of fabric (3) is first grabbed onto the chain, and transfers it through said intermediate pull off direction (16) releases it at a release point (22) at the time of attaining said main line direction (17) on said transverse main line unit (6) further to the processing stations.

2. The transferring system as claimed in claim 1, wherein a typical said driving element has set of rollers, conveyor belts, motors, and an alignment unit to drive the cut piece of fabric (3) as well as to align the cut piece of fabric (3) along the conveyor belts such that it moves at an equal distance from the sides of the conveyor system, particularly wherein said alignment unit consists of sensors, mechanical grippers and edge guiding systems.

3. The transferring system as claimed in claims 1 to 2, wherein said pull-off unit (5) is capable of grabbing said cut piece of fabric (3) when it is traveling in the cutting direction (15) and releasing the grabbed cut piece (8) after changing its direction by compensating for the speed difference by: a. running with the same speed as the speed of cut piece of fabric (3) during the grabbing stage and, b. running with the same speed as the main line when the grabbed cut piece (8) is released, and/or wherein the number of said rotating chains (10) is at least one and wherein each of said rotating chains (10) is mounted with at least one said grabbing clamp (7), and/or wherein said rotating chains (10) are provided in a single plane below or above the cut piece of fabric (3) or in a double layer arrangement or a two-plane in which one set of chains (10A) rotates above plane of the grabbed cut piece (8) and the other set (10B) below it.

4. The transferring system as claimed in claims 1 to 3, wherein said rotating chains (10) have a geometrical configuration that it allows them to rotate such that the rotation has a component in each of the three directions (15, 16, 17), and wherein when the rotating chain (10) is rotated, the clamps (7) follow the movement of the rotating chain (10) and pull the grabbed cut piece of fabric (3) from the cutting direction (or longitudinal direction) (15) onto the mainline direction (or transverse direction) (17) along the intermediate pull off direction (16) defined by the geometry of the rotating chains (10).

5. The transferring system as claimed in claims 1 to 4, wherein said clamp (7) is a single clamp (7C) having two elements between which the cut piece of fabric (3) is grabbed, preferably at its leading edge (24), or wherein said clamp (7) has separate units such as an upper and lower clamp (7 A, 7B) that are pushed towards each other to clamp the cut pieces of fabric (3) between them, particularly wherein the action of pushing the upper and lower clamps (7 A, 7B) towards each other is carried out by using a spring mechanism.

6. The transferring system as claimed in claims 1 to 5, wherein said rotating chains (10) have four geometric segments: a grabbing regime (12), an inclined pull-off regime (13), a release regime (14), and a compensation regime (11), wherein said grabbing regime (12) is aligned parallel to the cutting direction (15), said inclined pull-off regime (13) is oriented in a transitional direction set at a predetermined angle to the cutting direction (15), said release regime (14) is laid out parallel to the mainline direction (17), and the portion between said release point (22) and said grabbing point (21) is the compensation regime (11), particularly wherein the length of said grabbing regime (12) is long enough to enable grabbing of the cut piece of fabric (3) by the clamp (7), and wherein the length of travel of the chain in the transitional direction is long enough to pull the cut piece of fabric (3) from the cutting direction (15) and position it so that it will fit onto the conveyor line in the mainline direction (17), and the length of said release regime (14) is such that it enables a release of the cut piece of fabric (3).

7. The transferring system as claimed in claim 6, wherein said rotating chain (10) assumes a travel path between said release point (22) and said grabbing point (21) that is achieved in quickest time made possible by the capability of said transferring system (1).

8. The transferring system as claimed in claims 1 to 7, wherein the number of said rotating chains (10) is greater than 1, and wherein all chains are aligned parallelly to each other, and/or wherein at the time of grabbing of the cut piece of fabric (3) by the clamp (7), the linear speed of the cut piece of fabric (3) and the speed of the rotating chain (23) in its grabbing regime (12) are the same, and/or wherein while the cut piece of fabric (3) is transported in the cutting direction (15), said rotating chains (10) are brought to the same linear speed, typically by accelerating it, as that of the cut piece (3), and wherein during the acceleration, at least one of said grabbing clamp (7) mounted on the rotating chain (10) is positioned in said grabbing (12) regime of the rotating chain (10), and further wherein said acceleration of the chain happens only when any previous cut piece is released, and when no material is currently grabbed by the clamp (7).

9. The transferring system as claimed in claims 1 to 8, wherein when said rotating chain (10) reaches the same speed as that of the cut piece of fabric (3), the clamp (7) is closed to grab said cut piece of fabric (3), and said grabbed cut piece (8) is pulled by the rotational movement of the rotating chain (10), said acceleration being such that the speed component in cutting direction (18) of the grabbed cut piece (8) is sufficiently high that next cut piece of fabric (3) pulled from the material roll does not collide with said grabbed cut piece (8) as it moves in the intermediate pull-off direction (16), and/or wherein when the grabbed cut piece (8) is pulled long enough in the intermediate pull-off direction (16) to safely change its speed to speed in main line direction (19), without collision with the oncoming consecutive cut piece of fabric (3) from the material roll or material already delivered in the main line and the speed of the rotating chain (23) is adjusted again to enable a proper release of the grabbed cut piece (8) in the release regime (14) of the chain geometry, whereafter the speed of the rotating chain (23) is controlled in a way to ensure that the clamp (7) is at the position to start grabbing of the next piece when it must be grabbed, and/or wherein a rotational clamp head (20) provided on said clamp (7) compensates for the directional changes resulting from the movement path of the clamp (7), whereby the edges of the grabbed cut piece (8) retain their absolute and relative orientation throughout their travel so that its leading edge (24) is always parallel to the axis.

10. The transferring system as claimed in claims 1 to 9, wherein said rotating chains (10) are driven preferably by servo motors, particularly wherein there is a separate servo drive for each chain (10A, 10B) or several chains are driven by one motor.

11. A method for transferring cut pieces of web material around corners in the mainline of a conversion machine using a transferring system as claimed in claims 1 to 10, **characterized in that** said method comprises the steps of:
g. cutting a piece of fabric (3) to a predetermined length from a fabric from roll (2) using a cutter unit (9) and conveying the same by a longitudinal transportation unit (4) in the cutting direction (15);
h. moving a clamp (7) mounted on the rotating chain (10) along the path of said rotating chain (10) from a release point (22) to a grabbing point (21);
i. grabbing said cut piece of fabric (3) using said clamp (7) at said grabbing point (21) at the comers or at the leading edges (24) of said cut piece of fabric (3) and moving the grabbed cut piece (8) along a grabbing regime (12) of the rotating chain (10);
j. moving said grabbed cut piece (8) along the intermediate pull-off direction (16) path on the rotating chain (10) by an inclined pull off unit (5);
k. transferring said grabbed cut piece (8) to a main line direction (17) along the release regime (14) on the rotating chain (10) using a transverse main line unit (6);
l. releasing said grabbed cut piece (8) at said release point (22) for further processing stations.

12. The method as claimed in claim 11, wherein said pull-off unit (5) is capable of grabbing said cut piece of fabric (3) when it is traveling in the cutting direction (15) and releasing the grabbed cut piece (8) after changing its direction by compensating for the speed difference by: a. running with the same speed as the speed of cut piece of fabric (3) during the grabbing stage and, b. running with same speed as the main line when the grabbed cut piece (8) is released, and/or wherein the number of said rotating chains (10) is at least one and wherein each of said rotating chains (10) is mounted with at least one said grabbing clamp (7), and wherein said rotating chains (10) are provided in a single plane below or above the cut piece of fabric (3) or in a double layer arrangement or a two-plane in which one set of chains (10A) rotates above plane of the grabbed cut piece (8) and the other set (10B) below it.

13. The method as claimed in claims 11 to 12, wherein said rotating chains (10) have four geometric segments: a grabbing regime (12), an inclined pull-off regime (13), a release regime (14), and a compensation regime (11), wherein said grabbing regime (12) is aligned parallel to the cutting direction (15), said inclined pull-off regime (13) is oriented in a transitional direction set at a predetermined angle to the cutting direction (15), said release regime (14) is laid out parallel to the mainline direction (17), and the portion between said release point (22) and said grabbing point (21) is the compensation regime (11), and/or wherein at the time of grabbing of the cut piece of fabric (3) by the clamp (7), the linear speed of the cut piece of fabric (3) and the speed of the rotating chain (23) in its grabbing regime (12) are the same.

14. The method as claimed in claims 11 to 13, wherein while the cut piece of fabric (3) is transported in the cutting direction (15), said rotating chains (10) are brought to the same linear speed, typically by accelerating it, as that of the cut piece of fabric (3), and wherein during the acceleration, at least one of said grabbing clamp (7) mounted on the rotating chain (10) is positioned in said grabbing (12) regime of the rotating chain (10), and further wherein said acceleration of the chain happens only when any previous cut piece is released, and when no material is currently grabbed by the clamp (7), and/or wherein when said rotating chain (10) reaches the same speed as the cut piece of fabric (3), the clamp (7) is closed to grab said cut piece of fabric (3), and said grabbed cut piece (8) is pulled by the rotational movement of the rotating chain (10), said acceleration being such that the speed component in cutting direction (18) of the grabbed cut piece (8) is sufficiently high that next cut piece of fabric (3) pulled from the material roll does not collide with said grabbed cut piece (8) as it moves in the intermediate pull-off direction (16).

15. The method as claimed in claims 11 to 14, wherein when the grabbed cut piece (8) is pulled long enough in the intermediate pull-off direction (16) to safely change its speed to speed in main line direction (19), without collision with the oncoming consecutive cut piece of fabric (3) from the material roll or material already delivered in the main line, the speed of the rotating chain (23) is adjusted again to enable a proper release of the grabbed cut piece (8) in the release regime (14) of the chain geometry, whereafter the speed of the rotating chain (23) is controlled in a way to ensure that the clamp (7) is at the position to start grabbing of the next piece when it must be grabbed, and/or wherein a rotational clamp head (20) provided on said clamp (7) compensates for the directional changes resulting from the movement path of the clamp (7), whereby the edges of the grabbed cut piece (8) retain their absolute and relative orientation throughout their travel so that its leading edge (24) is always parallel to the axis, and/or wherein said rotating chains (10) are driven by servo motors, and wherein there is a separate servo drive for each chain (10A, 10B) or several rotating chains (10) are driven by one motor.

## Patentansprüche

1. Übertragungssystem zum Übertragen eines geschnittenen Stoffstücks (3) aus Bahnmaterial um Ecken in der Hauptlinie einer Verarbeitungsmaschine, wobei das Übertragungssystem eine Längstransporteinheit (4), eine Abzugseinheit (5) und eine Querhauptlinieneinheit (6) umfasst, wobei die Längstransporteinheit (4) aus einem Fördersystem besteht, das eine Vielzahl von Antriebselementen aufweist, um einen Vorwärtsschub an das geschnittene Stoffstück (3) bereitzustellen; wobei die Abzugseinheit (5) das geschnittene Stoffstück (3) von der Schnittrichtung (15) über die Zwischenabzugsrichtung (16) in die Hauptlinienrichtung (17) transportiert; **dadurch gekennzeichnet, dass** die Abzugseinheit (5) aus einer Vielzahl von rotierenden Ketten (10) besteht, auf denen Greifklammern (7) montiert sind und die dem Pfad der rotierenden Ketten (10) folgen, wobei, nachdem es durch die Schneidereinheit (9) geschnitten wurden, die Abzugseinheit (5) das geschnittene Stoffstück (3) an dem Greifpunkt (21) greift, wobei der Greifpunkt der Punkt auf der Kette ist, an dem ein geschnittenes Stoffstück (3) zuerst auf der Kette gegriffen wird, und wobei es über die Zwischenabzugsrichtung (16) übertragen wird und wobei es an einem Freigabepunkt (22) zu der Zeit zu der es zu der Hauptlinienrichtung (17) auf der Querhauptlinieneinheit (6), weiter zu den Bearbeitungsstationen, gelangt, freigegeben wird.

2. Transportsystem nach Anspruch 1, wobei ein typisches der Antriebselemente einen Rollensatz, Förderbänder, Motoren und eine Ausrichtungseinheit aufweist, um das geschnittene Stoffstück (3) anzutreiben und um das Stoffstück (3) entlang der Förderbänder derart auszurichten, dass es sich in gleichem Abstand von den Seiten des Fördersystems bewegt, insbesondere wobei die Ausrichtungseinheit aus Sensoren, mechanischen Greifern und Kantenführungssystemen besteht.

3. Transfersystem nach den Ansprüchen 1 bis 2, wobei die Abzugseinheit (5) in der Lage ist, das geschnittene Stoffstück (3) zu greifen, wenn es sich in Schnittrichtung (15) fortbewegt, und das gegriffene, geschnittene Stück (8) nach einem Ändern seiner Richtung freizugeben, durch Ausgleichen des Geschwindigkeitsunterschieds durch: a. Laufen mit der gleichen Geschwindigkeit wie die Geschwindigkeit des geschnittenen Stoffstücks (3) während der Greifphase und b. Laufen mit der gleichen Geschwindigkeit wie die Hauptlinie, wenn das gegriffene, geschnittene Stück (8) freigegeben wird, und/oder wobei die Anzahl der rotierenden Ketten (10) mindestens eins beträgt und wobei jede der rotierenden Ketten (10) mit mindestens einer Greifklammer (7) montiert ist, und/oder wobei die rotierenden Ketten (10) in einer einzigen Ebene unter oder über dem geschnittenen Stoffstück (3) oder in einer doppellagigen Anordnung oder in zwei Ebenen angeordnet sind, wobei ein Satz von Ketten (10A) über der Ebene des gegriffenen, geschnittenen Stücks (8) rotiert und der andere Satz (10B) unter diesem.

4. Transfersystem nach den Ansprüchen 1 bis 3, wobei die rotierenden Ketten (10) eine geometrische Konfiguration aufweisen, die es ihnen ermöglicht, derart zu rotieren, dass die Rotation eine Komponente in jede der drei Richtungen (15, 16, 17) aufweist, und wobei, wenn die rotierende Kette (10) rotiert wird, die Klammern (7) der Bewegung der rotierenden Kette (10) folgen und das gegriffene, geschnittene Stoffstück (3) aus der Schnittrichtung (oder Längsrichtung) (15) auf die Hauptlinienrichtung (oder Querrichtung) (17) entlang der Zwischenabzugsrichtung (16) ziehen, die durch die Geometrie der rotierenden Ketten (10) definiert ist.

5. Transfersystem nach den Ansprüchen 1 bis 4, wobei die Klammer (7) eine einzelne Klammer (7C) ist, die zwei Elemente aufweist, zwischen denen das geschnittene Stoffstück (3) vorzugsweise an seiner Vorderkante (24) gegriffen wird, oder wobei die Klammer (7) separate Einheiten wie eine obere und eine untere Klammer (7A, 7B) aufweist, die aufeinander zu gedrückt werden, um die geschnittenen Stoffstücke (3) zwischen sich festzuklammern, insbesondere wobei die Aktion des Drückens der oberen und unteren Klammer (7A, 7B) aufeinander zu durch Verwenden einen Federmechanismus vorgenommen wird.

6. Transfersystem nach den Ansprüchen 1 bis 5, wobei die rotierenden Ketten (10) vier geometrische Segmente aufweisen: ein Greifsystem (12), ein Schrägabzugssystem (13), ein Freigabesystem (14) und ein Ausgleichssystem (11), wobei das Greifsystem (12) parallel zu der Schnittrichtung (15) ausgerichtet ist, das Schrägabzugssystem (13) in einer Übergangsrichtung ausgerichtet ist, die in einem vorbestimmten Winkel zu der Schnittrichtung (15) eingestellt ist, das Freigabesystem (14) parallel zu der Hauptlinienrichtung (17) ausgelegt ist und der Abschnitt zwischen dem Freigabepunkt (22) und dem Greifpunkt (21) das Ausgleichssystem (11) ausbildet, insbesondere wobei die Länge des Greifsystems (12) lang genug ist, um das Greifen des geschnittenen Stoffstücks (3) durch die Klammer (7) zu ermöglichen, und wobei die Fortbewegungslänge der Kette in der Übergangsrichtung lang genug ist, um das geschnittene Stoffstück (3) aus der Schnittrichtung (15) zu ziehen und es zu positionieren, sodass es auf die Förderlinie in Hauptlinienrichtung (17) passt und die Länge des Freigabesystems (14) derart ist, dass sie eine Freigabe des geschnittenen Stoffstücks (3) ermöglicht.

7. Transfersystem nach Anspruch 6, wobei die rotierende Kette (10) einen Bewegungspfad zwischen dem Freigabepunkt (22) und dem Greifpunkt (21) einnimmt, der in der kürzesten Zeit erreicht wird, die durch die Leistungsfähigkeit des Transfersystems (1) ermöglicht wird.

8. Transportsystem nach den Ansprüchen 1 bis 7, wobei die Anzahl von rotierenden Ketten (10) größer als 1 ist und wobei alle Ketten parallel zueinander ausgerichtet sind und/oder wobei zu der Zeit des Greifens des geschnittenen Stoffstücks (3) durch die Klammer (7) die Lineargeschwindigkeit des geschnittenen Stoffstücks (3) und die Geschwindigkeit der rotierenden Kette (23) in ihrem Greifsystem (12) gleich sind und/oder wobei während das geschnittenen Stoffstück (3) in Schnittrichtung (15) transportiert wird, die rotierenden Ketten (10) auf die gleiche Lineargeschwindigkeit, typischerweise durch Beschleunigen dieser wie das geschnittene Stück (3) gebracht werden und wobei während der Beschleunigung mindestens eine der Greifklammern (7), die an der rotierenden Kette (10) montiert ist, in dem Greif(12)-System der rotierenden Kette (10) positioniert ist, und ferner wobei die Beschleunigung der Kette nur dann erfolgt, wenn ein beliebiges zuvor geschnittenes Stück freigegeben wird und wenn aktuell kein Material durch die Klammer (7) gegriffen wird.

9. Transfersystem nach den Ansprüchen 1 bis 8, wobei, wenn die rotierende Kette (10) die gleiche Geschwindigkeit wie das geschnittene Stoffstück (3) erreicht, die Klammer (7) geschlossen wird, um das geschnittene Stoffstück (3) zu greifen, und das gegriffene, geschnittene Stück (8) durch die Rotationsbewegung der rotierenden Kette (10) gezogen wird, wobei die Beschleunigung derart ist, dass die Geschwindigkeitskomponente in Schnittrichtung (18) des gegriffenen, geschnittenen Stücks (8) ausreichend hoch ist, dass ein nächstes, geschnittenes Stoffstück (3), das von der Materialrolle gezogen wird, nicht mit dem gegriffenen, geschnittenen Stück (8) kollidiert, wenn es sich in der Zwischenabzugsrichtung (16) bewegt, und/oder wobei, wenn das gegriffene, geschnittene Stück (8) lange genug in der Zwischenabzugsrichtung (16) gezogen wird, um seine Geschwindigkeit sicher auf die Geschwindigkeit in Hauptlinienrichtung (19) zu ändern, ohne mit dem herankommenden nächsten Stoffstück (3) von der Materialrolle oder bereits in der Hauptlinie geliefertem Material zu kollidieren, und die Geschwindigkeit der rotierenden Kette (23) erneut angepasst wird, um eine ordnungsgemäße Freigabe des gegriffenen, geschnittenen Stücks (8) in dem Freigabesystem (14) der Kettengeometrie zu ermöglichen, wonach die Geschwindigkeit der rotierenden Kette (23) auf eine Weise gesteuert wird, um sicherzustellen, dass die Klammer (7) in der Position ist, um mit dem Greifen des nächsten Stücks zu beginnen, wenn dieses gegriffen werden muss, und/oder wobei ein rotierender Klammerkopf (20), der an der Klammer (7) bereitgestellt ist, die Richtungsänderungen ausgleicht, die aus dem Bewegungspfad der Klammer (7) resultiert, wodurch die Kanten des gegriffenen, geschnittenen Stücks (8) ihre absolute und relative Ausrichtung während ihrer gesamten Bewegung beibehalten, sodass ihre Vorderkante (24) immer parallel zu der Achse ist.

10. Transfersystem nach den Ansprüchen 1 bis 9, wobei die rotierenden Ketten (10) vorzugsweise durch Servomotoren angetrieben werden, insbesondere wobei es für jede Kette (10A, 10B) einen separaten Servoantrieb gibt oder mehrere Ketten durch einen Motor angetrieben werden.

11. Verfahren zum Übertragen von geschnittenen Bahnmaterialstücken um Ecken in der Hauptlinie einer Verarbeitungsmaschine unter Verwendung eines Übertragungssystems nach den Ansprüchen 1 bis 10,
**dadurch gekennzeichnet, dass** das Verfahren die Schritte umfasst:
g. Schneiden eines Stoffstücks (3) auf eine vorbestimmte Länge von einer Stoffrolle (2) unter Verwendung einer Schneidereinheit (9) und Fördern desselben durch eine Längstransporteinheit (4) in Schnittrichtung (15);
h. Bewegen einer Klammer (7), die auf der rotierenden Kette (10) montiert ist, entlang des Pfads der rotierenden Kette (10) von einem Freigabepunkt (22) zu einem Greifpunkt (21);
i. Greifen des geschnittenen Stoffstücks (3) unter Verwendung der Klammer (7) an dem Greifpunkt (21) an den Ecken oder an den Vorderkanten (24) des geschnittenen Stoffstücks (3) und Bewegen des gegriffenen, geschnittenen Stücks (8) entlang eines Greifsystems (12) der rotierenden Kette (10);
j. Bewegen des gegriffenen, geschnittenen Stücks (8) entlang der Zwischenabzugsrichtung (16) auf der rotierenden Kette (10) durch eine Schrägabzugseinheit (5);
k. Übertragen des gegriffenen, geschnittenen Stücks (8) in eine Hauptlinienrichtung (17) entlang des Freigabesystems (14) auf der rotierenden Kette (10) unter Verwendung einer Querhauptlinieneinheit (6);
l. Freigeben des gegriffenen, geschnittenen Stücks (8) an dem Freigabepunkt (22) für weitere Bearbeitungsstationen.

12. Verfahren nach Anspruch 11, wobei die Abzugseinheit (5) in der Lage ist, das geschnittene Stoffstück (3) zu greifen, wenn es sich in Schnittrichtung (15) fortbewegt, und das gegriffene, geschnittene Stück (8) nach einem Ändern seiner Richtung freizugeben, durch Ausgleichen des Geschwindigkeitsunterschieds durch: a. Laufen mit der gleichen Geschwindigkeit wie die Geschwindigkeit des geschnittenen Stoffstücks (3) während der Greifphase und b. Laufen mit der gleichen Geschwindigkeit wie die Hauptlinie, wenn das gegriffene, geschnittene Stück (8) freigegeben wird, und/oder wobei die Anzahl der rotierenden Ketten (10) mindestens eins beträgt und wobei an jede der rotierenden Ketten (10) mit mindestens einer Greifklammer (7) montiert ist, und wobei die rotierenden Ketten (10) in einer einzigen Ebene unter oder über dem geschnittenen Stoffstück (3) oder in einer doppellagigen Anordnung oder in zwei Ebenen angeordnet sind, wobei ein Satz von Ketten (10A) über der Ebene des gegriffenen, geschnittenen Stücks (8) rotiert und der andere Satz (10B) unter diesem.

13. Verfahren nach den Ansprüchen 11 bis 12, wobei die rotierenden Ketten (10) vier geometrische Segmente aufweisen: ein Greifsystem (12), ein Schrägabzugssystem (13), ein Freigabesystem (14) und ein Ausgleichssystem (11), wobei das Greifsystem (12) parallel zu der Schnittrichtung (15) ausgerichtet ist, das Schrägabzugssystem (13) in einer Übergangsrichtung ausgerichtet ist, die in einem vorbestimmten Winkel zu der Schnittrichtung (15) eingestellt ist, das Freigabesystem (14) parallel zu der Hauptlinienrichtung (17) ausgelegt ist, und der Abschnitt zwischen dem Freigabepunkt (22) und dem Greifpunkt (21) das Ausgleichssystem (11) ist und/oder wobei zu der Zeit des Greifens des geschnittenen Stoffstücks (3) durch die Klammer (7) die Lineargeschwindigkeit des geschnittenen Stoffstücks (3) und die Geschwindigkeit der rotierenden Kette (23) in ihrem Greifsystem (12) gleich sind.

14. Verfahren nach den Ansprüchen 11 bis 13, wobei während das geschnittenen Stoffstück (3) in Schnittrichtung (15) transportiert wird, die rotierenden Ketten (10) auf die gleiche Lineargeschwindigkeit, typischerweise durch Beschleunigen dieser wie das geschnittene Stück (3) gebracht werden und wobei während der Beschleunigung mindestens eine der Greifklammern (7), die an der rotierenden Kette (10) montiert ist, in dem Greif(12)-System der rotierenden Kette (10) positioniert ist, und ferner wobei die Beschleunigung der Kette nur dann erfolgt, wenn ein beliebiges zuvor geschnittenes Stück freigegeben wird und wenn aktuell kein Material durch die Klammer (7) gegriffen wird und/oder wobei, wenn die rotierende Kette (10) die gleiche Geschwindigkeit wie das geschnittene Stoffstück (3) erreicht, die Klammer (7) geschlossen wird, um das geschnittene Stoffstück (3) zu greifen, und das gegriffene, geschnittene Stück (8) durch die Rotationsbewegung der rotierenden Kette (10) gezogen wird, wobei die Beschleunigung derart ist, dass die Geschwindigkeitskomponente in Schnittrichtung (18) des gegriffenen, geschnittenen Stücks (8) ausreichend hoch ist, dass ein nächstes, geschnittenes Stoffstück (3), das von der Materialrolle gezogen wird, nicht mit dem gegriffenen, geschnittenen Stück (8) kollidiert, wenn es sich in der Zwischenabzugsrichtung (16) bewegt.

15. Verfahren nach den Ansprüchen 11 bis 14, wobei, wenn das gegriffene, geschnittene Stück (8) lange genug in der Zwischenabzugsrichtung (16) gezogen wird, um seine Geschwindigkeit sicher auf die Geschwindigkeit in Hauptlinienrichtung (19) zu ändern, ohne mit dem herankommenden nächsten Stoffstück (3) von der Materialrolle oder bereits in der Hauptlinie geliefertem Material zu kollidieren, und die Geschwindigkeit der rotierenden Kette (23) erneut angepasst wird, um eine ordnungsgemäße Freigabe des gegriffenen, geschnittenen Stücks (8) in dem Freigabesystem (14) der Kettengeometrie zu ermöglichen, wonach die Geschwindigkeit der rotierenden Kette (23) auf eine Weise gesteuert wird, um sicherzustellen, dass die Klammer (7) in der Position ist, um mit dem Greifen des nächsten Stücks zu beginnen, wenn dieses gegriffen werden muss, und/oder wobei ein rotierender Klammerkopf (20), der an der Klammer (7) bereitgestellt ist, die Richtungsänderungen ausgleicht, die aus dem Bewegungspfad der Klammer (7) resultiert, wodurch die Kanten des gegriffenen, geschnittenen Stücks (8) ihre absolute und relative Ausrichtung während ihrer gesamten Bewegung beibehalten, sodass ihre Vorderkante (24) immer parallel zu der Achse ist und/oder wobei die rotierende Ketten (10) durch Servomotoren angetrieben werden, und wobei es für jede Kette (10A, 10B) einen separaten Servoantrieb gibt oder mehrere rotierende Ketten (10) durch einen Motor angetrieben werden.

## Revendications

1. Système de transfert permettant de transférer une pièce découpée de tissu (3) d'un matériau en bande autour d'angles dans la ligne principale d'une machine de conversion, dans lequel ledit système de transfert comprend une unité de transport longitudinal (4), une unité d'extraction (5) et une unité de ligne principale transversale (6), dans lequel ladite unité de transport longitudinal (4) est constitué d'un système transporteur présentant une pluralité d'éléments d'entraînement pour assurer une avance vers l'avant à la pièce découpée du tissu (3) ; ladite unité d'extraction (5) transportant ladite pièce découpée de tissu (3) de la direction de coupe (15), à travers la direction d'extraction intermédiaire (16), vers la direction de ligne principale (17) ;
**caractérisé en ce que** ladite unité d'extraction (5) est constituée d'une pluralité de chaînes rotatives (10) sur lesquelles sont montées des pinces de préhension (7) qui suivent la trajectoire des chaînes rotatives (10), dans lequel, après avoir été découpée par l'unité de coupe (9), ladite unité d'extraction (5) saisit ladite pièce découpée du tissu (3) au niveau du point de préhension (21), ledit point de préhension étant le point de la chaîne où une pièce découpée de tissu (3) est d'abord saisi sur la chaîne, et le transfère à travers ladite direction d'extraction intermédiaire (16) en le relâchant à un point de desserrage (22) au moment d'atteindre ladite direction de ligne principale (17) sur ladite unité de ligne principale transversale (6) plus loin vers les stations de traitement.

2. Système de transfert selon la revendication 1, dans lequel un dit élément d'entraînement typique présente un ensemble de rouleaux, courroies transporteuses, moteurs et une unité d'alignement pour entraîner la pièce découpée de tissu (3) ainsi que pour aligner la pièce découpée de tissu (3) le long des courroies transporteuses de telle sorte qu'elle se déplace à une distance égale des côtés du système transporteur, en particulier dans lequel ladite unité d'alignement est constituée de capteurs, d'organes de préhension mécaniques et de systèmes de guidage de bord.

3. Système de transfert selon les revendications 1 à 2, dans lequel ladite unité d'extraction (5) est capable de saisir ladite pièce découpée de tissu (3) lorsqu'elle se déplace dans la direction de coupe (15) et de desserrer la pièce découpée (8) saisie après avoir changé sa direction en compensant la différence de vitesse : a. en fonctionnant à la même vitesse que la vitesse de la pièce découpée de tissu (3) pendant la phase de préhension et, b. en fonctionnant à la même vitesse que la ligne principale lorsque la pièce découpée (8) saisie est desserrée, et/ou dans lequel le nombre desdites chaînes rotatives (10) est au moins un et dans lequel chacune desdites chaînes rotatives (10) est montée avec au moins une dite pince de préhension (7), et/ou dans lequel lesdites chaînes rotatives (10) sont fournies dans un seul plan en-dessous ou au-dessus de la pièce découpée de tissu (3) ou dans un agencement à double couche ou à deux plans dans lequel un ensemble de chaînes (10A) tourne au-dessus du plan de la pièce découpée (8) saisie et l'autre ensemble (10B) en-dessous de celui-ci.

4. Système de transfert selon les revendications 1 à 3, dans lequel lesdites chaînes rotatives (10) présentent une configuration géométrique qui leur permet de tourner de telle sorte que la rotation présente une composante dans chacune des trois directions (15, 16, 17), et dans lequel, lorsque la chaîne rotative (10) est tournée, les pinces (7) suivent le déplacement de la chaîne rotative (10) et tirent la pièce découpée de tissu (3) saisie de la direction de coupe (ou direction longitudinale) (15) vers la direction de ligne principale (ou direction transversale) (17) le long de la direction d'extraction intermédiaire (16) définie par la géométrie des chaînes rotatives (10).

5. Système de transfert selon les revendications 1 à 4, dans lequel ladite pince (7) est une pince unique (7C) présentant deux éléments entre lesquels la pièce découpée de tissu (3) est saisie, de préférence au niveau de son bord d'attaque (24), ou dans lequel ladite pince (7) présente des unités séparées telles qu'une pince supérieure et une pince inférieure (7 A, 7B) qui sont poussées l'une vers l'autre pour serrer les pièces découpées de tissu (3) entre elles, en particulier dans lequel l'action de pousser les pinces supérieure et inférieure (7 A, 7B) l'une vers l'autre est effectuée en utilisant un mécanisme à ressorts.

6. Système de transfert selon les revendications 1 à 5, dans lequel lesdites chaînes rotatives (10) présentent quatre segments géométriques : un régime de préhension (12), un régime d'extraction incliné (13), un régime de desserrage (14), et un régime de compensation (11), dans lequel ledit régime de préhension (12) est aligné parallèlement à la direction de coupe (15), ledit régime d'extraction incliné (13) est orienté dans une direction transitoire réglée à un angle prédéterminé par rapport à la direction de coupe (15), ledit régime de desserrage (14) est disposé parallèlement à la direction de ligne principale (17), et la partie entre ledit point de desserrage (22) et ledit point de préhension (21) est le régime de compensation (11), en particulier, dans lequel la longueur dudit régime de préhension (12) par la pince (7), et dans lequel la longueur de déplacement de la chaîne dans la direction transitoire est suffisamment longue pour tirer la pièce découpée de tissu (3) à partir de la direction de coupe (15) et la positionner de sorte qu'elle s'adapte sur la ligne transporteuse dans la direction de ligne principale (17), et la longueur dudit régime de desserrage (14) est telle qu'elle permet le desserrage de la pièce découpée de tissu (3).

7. Système de transfert selon la revendication 6, dans lequel ladite chaîne rotative (10) assume un trajet de déplacement entre ledit point de desserrage (22) et ledit point de préhension (21) qui est réalisé dans le temps le plus court possible grâce à la capacité dudit système de transfert (1).

8. Système de transfert selon les revendications 1 à 7, dans lequel le nombre desdites chaînes rotatives (10) est supérieur à 1, et dans lequel toutes les chaînes sont alignées parallèlement les unes aux autres, et/ou dans lequel au moment de la préhension de la pièce découpée de tissu (3) par la pince (7), la vitesse linéaire de la pièce découpée de tissu (3) et la vitesse de la chaîne rotative (23) dans son régime de préhension (12) sont les mêmes, et/ou dans lequel pendant que la pièce découpée de tissu (3) est transportée dans la direction de coupe (15), lesdites chaînes rotatives (10) sont amenées à la même vitesse linéaire, typiquement en l'accélérant, que celle de la pièce découpée (3), et dans lequel pendant l'accélération, au moins une desdites pinces de préhension (7) montées sur la chaîne rotative (10) est positionnée dans ledit régime de préhension (12) de la chaîne rotative (10), et dans lequel, en outre, ladite accélération de la chaîne ne se produit que lorsque toute pièce découpée précédente est desserrée, et lorsqu'aucun matériau n'est actuellement saisi par la pince (7).

9. Système de transfert selon les revendications 1 à 8, dans lequel lorsque ladite chaîne rotative (10) atteint la même vitesse que celle de la pièce découpée de tissu (3), la pince (7) est fermée pour saisir ladite pièce découpée de tissu (3), et ladite pièce découpée (8) saisie est tirée par le mouvement de rotation de la chaîne rotative (10), ladite accélération étant de telle sorte que la composante de vitesse dans la direction de coupe (18) de la pièce découpée (8) saisie est suffisamment élevée pour que la pièce découpée de tissu (3) suivante tirée à partir du rouleau de matériau n'entre pas en collision avec ladite pièce découpée (8) saisie lorsqu'elle se déplace dans la direction d'extraction intermédiaire (16), et/ou lorsque la pièce découpée (8) saisie est tirée suffisamment longtemps dans la direction d'extraction intermédiaire (16) pour changer en toute sécurité sa vitesse à la vitesse dans la direction de ligne principale (19), sans collision avec la pièce découpée de tissu (3) consécutive venant en sens inverse à partir du rouleau de matériau ou du matériau déjà fourni dans la ligne principale et la vitesse de la chaîne rotative (23) est à nouveau ajustée pour permettre un desserrage correct de la pièce découpée (8) saisie dans le régime de desserrage (14) de la géométrie de chaîne, après quoi la vitesse de la chaîne rotative (23) est commandée de manière à garantir que la pince (7) est en position de commencer la préhension de la pièce suivante lorsqu'elle doit être saisie, et/ou dans lequel une tête de pince rotative (20) fournie sur ladite pince (7) compense les changements de direction résultant du trajet de déplacement de la pince (7), selon lequel les bords de la pièce découpée (8) saisie conservent leur orientation absolue et relative tout au long de leur déplacement, de sorte que son bord d'attaque (24) est toujours parallèle à l'axe.

10. Système de transfert selon les revendications 1 à 9, dans lequel lesdites chaînes rotatives (10) sont entraînées de préférence par des servomoteurs, en particulier dans lequel lorsqu'il y a un servomoteur séparé pour chaque chaîne (10A, 10B) ou que plusieurs chaînes sont entraînées par un seul moteur.

11. Procédé de transfert de pièces découpées de matériau en bande autour d'angles dans la ligne principale d'une machine de conversion à l'aide d'un système de transfert selon les revendications 1 à 10, **caractérisé en ce que** ledit procédé comprend les étapes consistant à :
g. découper une pièce de tissu (3) à une longueur prédéterminée à partir d'un rouleau de tissu (2) à l'aide d'une unité de coupe (9) et l'acheminer par une unité de transport longitudinal (4) dans la direction de coupe (15) ;
h. déplacer une pince (7) montée sur la chaîne rotative (10) le long du trajet de ladite chaîne rotative (10), d'un point de desserrage (22) à un point de préhension (21) ;
i. saisir ladite pièce découpée de tissu (3) à l'aide de ladite pince (7) au niveau dudit point de préhension (21) au niveau des angles ou au niveau des bords d'attaque (24) de ladite pièce découpée de tissu (3) et déplacer la pièce découpée (8) saisie le long d'un régime de préhension (12) de la chaîne rotative (10);
j. déplacer ladite pièce découpée (8) saisie le long du trajet de direction d'extraction intermédiaire (16) sur la chaîne rotative (10) par une unité d'extraction inclinée (5) ;
k. transférer ladite pièce découpée (8) saisie vers une direction de ligne principale (17) le long du régime de desserrage (14) sur la chaîne rotative (10) à l'aide d'une unité de ligne principale transversale (6) ;
l. desserrer ladite pièce découpée (8) saisie au niveau du point de préhension (22) pour des stations de traitement supplémentaires.

12. Procédé selon la revendication 11, dans lequel ladite unité d'extraction (5) est capable de saisir ladite pièce découpée de tissu (3) lorsqu'elle se déplace dans la direction de coupe (15) et de desserrer la pièce découpée (8) saisie après avoir changé sa direction en compensant la différence de vitesse : a. en fonctionnant à la même vitesse que celle de la pièce découpée de tissu (3) pendant la phase de préhension et, b. en fonctionnant à la même vitesse que celle de la ligne principale lorsque la pièce découpée (8) saisie est desserrée, et/ou dans lequel le nombre desdites chaînes rotatives (10) est au moins un et dans lequel chacune desdites chaînes rotatives (10) est montée avec au moins une pince de préhension (7), et dans lequel lesdites chaînes rotatives (10) sont fournies dans un seul plan en-dessous ou au-dessus de la pièce découpée de tissu (3) ou dans un agencement à double couche ou à deux plans dans lequel un ensemble de chaînes (10A) tourne au-dessus du plan de la pièce découpée (8) saisie et l'autre ensemble (10B) en-dessous de celui-ci.

13. Procédé selon les revendications 11 à 12, dans lequel lesdites chaînes rotatives (10) présentent quatre segments géométriques : un régime de préhension (12), un régime d'extraction incliné (13), un régime de desserrage (14) et un régime de compensation (11), dans lequel ledit régime de préhension (12) est aligné parallèlement à la direction de coupe (15), ledit régime d'extraction incliné (13) est orienté dans une direction transitoire réglée à un angle prédéterminé par rapport à la direction de coupe (15), ledit régime de desserrage (14) est disposé parallèlement à la direction de ligne principale (17), et la partie entre ledit point de desserrage (22) et ledit point de préhension (21) est le régime de compensation (11), et/ou dans lequel, au moment de la préhension de la pièce découpée de tissu (3) par la pince (7), la vitesse linéaire de la pièce découpée de tissu (3) et la vitesse de la chaîne rotative (23) dans son régime de préhension (12) sont les mêmes.

14. Procédé selon les revendications 11 à 13, dans lequel pendant que la pièce découpée de tissu (3) est transportée dans la direction de coupe (15), lesdites chaînes rotatives (10) sont amenées à la même vitesse linéaire, typiquement en l'accélérant, que celle de la pièce découpée de tissu (3), et dans lequel pendant l'accélération, au moins une de ladite pince de préhension (7) montée sur la chaîne rotative (10) est positionnée dans ledit régime de préhension (12) de la chaîne rotative (10), et dans lequel en outre ladite accélération de la chaîne ne se produit que lorsque toute pièce découpée précédente est desserrée et qu'aucun matériau n'est actuellement saisi par la pince (7), et/ou dans lequel, lorsque la chaîne rotative (10) atteint la même vitesse que la pièce découpée de tissu (3), la pince (7) est fermée pour saisir ladite pièce découpée de tissu (3), et ladite pièce découpée (8) saisie est tirée par le mouvement de rotation de la chaîne rotative (10), ladite accélération étant de telle sorte que la composante de vitesse dans la direction de coupe (18) de la pièce découpée (8) saisie est suffisamment élevée pour que la pièce de tissu découpée de tissu (3) suivante tirée du rouleau de matériau n'entre pas en collision avec ladite pièce découpée (8) saisie lorsqu'elle se déplace dans la direction d'extraction intermédiaire (16).

15. Procédé selon les revendications 11 à 14, dans lequel lorsque la pièce découpée (8) saisie est tirée suffisamment longtemps dans la direction d'extraction intermédiaire (16) pour changer en toute sécurité sa vitesse à la vitesse dans la direction de ligne principale (19), sans collision avec la pièce découpée de tissu (3) consécutive venant en sens inverse à partir du rouleau de matériau ou du matériau déjà fourni dans la ligne principale, la vitesse de la chaîne rotative (23) est à nouveau ajustée pour permettre un desserrage correct de la pièce découpée (8) saisie dans le régime de desserrage (14) de la géométrie de chaîne, après quoi la vitesse de la chaîne rotative (23) est commandée de manière à garantir que la pince (7) est en position de commencer la préhension de la pièce suivante lorsqu'elle doit être saisie, et/ou dans laquelle une tête de pince rotative (20) fournie sur ladite pince (7) compense les changements de direction résultant du trajet de déplacement de la pince (7), selon lequel les bords de la pièce découpée (8) saisie conservent leur orientation absolue et relative tout au long de leur déplacement, de sorte que son bord d'attaque (24) est toujours parallèle à l'axe, et/ou dans lequel lesdites chaînes rotatives (10) sont entraînées par des servomoteurs, et dans lequel il y a un servomoteur séparé pour chaque chaîne (10A, 10B) ou plusieurs chaînes rotatives (10) sont entraînées par un seul moteur.
